# EUROPEAN PATENT APPLICATION

(11) **EP 4 435 480 A1**
(43) Date of publication of application: **25.09.2024**
(21) Application number: 22892929.5
(22) Date of filing: 15.11.2022
(51) Int. Cl.: G02B 5/02, C08K 3/30, C08L 23/10, C08L 83/04, F21S 2/00

(54) **LIGHT-DIFFUSING RESIN COMPOSITION AND LIGHT-DIFFUSING MEMBER**

(30) Priority: 15.11.2021 JP 2021185936
(71) Applicant: Panasonic Intellectual Property Management Co., Ltd., Kadoma-shi, Osaka 571-0057 (JP)
(72) Inventor: TAKADA, Kohei, Kadoma-shi, Osaka 571-0057 (JP)
(74) Representative: Appelt, Christian W.
(86) International application number: PCT/JP2022/042326
(87) International publication number: WO 2023/085431

(57) **Abstract**

An object of the present disclosure is to provide a light-diffusing resin composition allowing for formation of a light-diffusing member which is less likely to make a creaky noise. A light-diffusing resin composition according to an aspect of the present disclosure contains a polypropylene resin and silicone powder.

## Description

### Technical Field

The present disclosure relates to light-diffusing resin compositions and light-diffusing members and specifically relates to a light-diffusing resin composition containing a thermoplastic resin and a light-diffusing member containing the light-diffusing resin composition.

### Background Art

Patent Literature 1 discloses a light diffusion panel obtained by molding a light-diffusing thermoplastic resin composition including 0.1 to 15 weight % polycaprolactone, 85 to 99.9 weight % polycarbonate resin, 0.1 to 10 parts by weight of light-diffusing agent, and 0 to 0.1 parts by weight of fluorescent brightening agent.

### Citation List

### Patent Literature

Patent Literature 1: JP 2011-219763 A

### Summary of Invention

It is an object of the present disclosure to provide a light-diffusing resin composition allowing for formation of a light-diffusing member which is less likely to make a creaky noise and the light-diffusing member which is less likely to make the creaky noise.

A light-diffusing resin composition according to an aspect of the present disclosure contains a polypropylene resin and silicone powder.

A light-diffusing member according to an aspect of the present disclosure is formed from the light-diffusing resin composition.

### Brief Description of Drawings

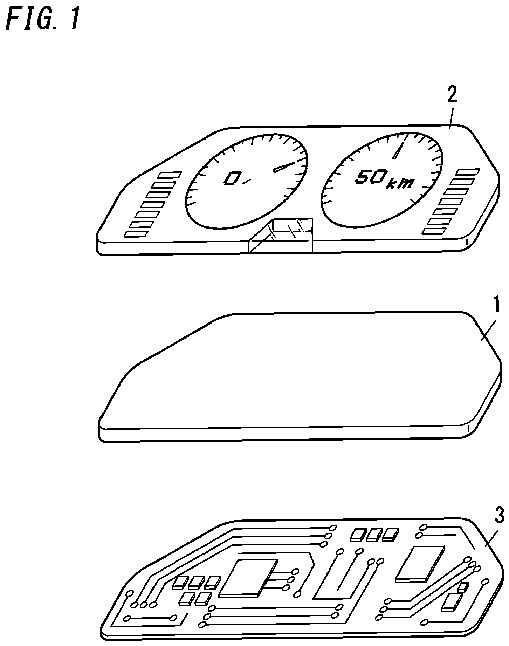

FIG. 1 is an exploded perspective view of an example of a display device including a light-diffusing member according to an embodiment of the present disclosure.

### Description of Embodiments

A light diffusion panel is disposed to cover a light source, thereby diffusing light emitted from the light source while transmitting the light to make visual recognition of a shape of the light source difficult for an observer.

According to research conducted by the inventors, transmission of a vibration to a device including a light-diffusing member, such as the light diffusion panel, is likely to make a creaky noise. In particular, when the light-diffusing member is applied to an instrument panel, a door trim, and the like of an automobile, a vibration caused during driving of the automobile is likely to make the creaky noise, which causes an uncomfortable feeling of passengers in the automobile. Moreover, applying a lubricating oil and the like to the light-diffusing member in order to suppress the creaky noise reduces production efficiency of the device including the light-diffusing member, and when the effect of the lubricating oil decreases, the creaky noise is likely to be made.

Therefore, the present disclosure provides a light-diffusing resin composition allowing for formation of a light-diffusing member which is less likely to make a creaky noise while securing a good light-diffusing property, and the light-diffusing member which is less likely to make the creaky noise while securing the good light-diffusing property.

With reference to FIG. 1, an embodiment of the present disclosure will be described below. Note that the present disclosure is not limited to the embodiment described below. The embodiment described below is merely an example of various embodiments of the present disclosure, and various modifications may be made depending on design as long as the object of the present disclosure is achieved.

The drawings to be referred to in the description below are schematic representations, and the dimensional ratio of components in the drawings does not necessarily reflect the actual dimensional ratio.

A light-diffusing resin composition (hereinafter referred to as a composition (X)) according to the present embodiment contains a polypropylene resin and a light-diffusing agent. The light-diffusing agent contains silicone powder. That is, the composition (X) contains the polypropylene resin and the silicone powder.

According to the present embodiment, the light-diffusing member which is less likely to make the creaky noise can be formed from the composition (X).

The present embodiment will be described in further detail.

As described above, the composition (X) contains the polypropylene resin. Conventionally, a light-diffusing member may be produced from a polycarbonate resin, but in this case, the light-diffusing member is likely to make the creaky noise. The creaky noise is made, for example, due to friction between the light-diffusing member and a member stacked on the light-diffusing member, a member holding the light-diffusing member, or the like. However, in the present embodiment, since the composition (X) contains the polypropylene resin, the light-diffusing member formed from the composition (X) is less likely to make the creaky noise. Moreover, the polypropylene resin has high crystallinity and is therefore inherently rarely applied to optical components, but the light-diffusing member formed from the composition (X) containing the polypropylene resin can have sufficient light transmittance, that is, the polypropylene resin is less likely to impair the function of the light-diffusing member.

The polypropylene resin is a polymer of an olefin-based hydrocarbon including propylene. The proportion of a structural unit derived from the propylene to the entire structural unit derived from the olefin-based hydrocarbon in the polypropylene resin is, for example, greater than or equal to 95 mol% and less than or equal to 100 mol%.

The polypropylene resin preferably contains at least one of a homopolymer of the propylene or a random polymer of a propylene monomer and an olefin-based hydrocarbon of six or less carbon atoms. In this case, as compared with, for example, the case where the polypropylene resin is a block copolymer, the stiffness and the transparency of the light-diffusing member can be enhanced with balance.

The composition (X) may contain only the polypropylene resin as a resin component, or most of the resin component may be the polypropylene resin. In this case, the light-diffusing member is particularly less likely to make the creaky noise. When most of the resin component is be the polypropylene resin, the percentage of the polypropylene resin to the total resin component is, for example, greater than or equal to 90 mass%.

The resin component in the composition (X) may further contain a component other than the polypropylene resin. The component other than the polypropylene resin contains at least one of, for example, an elastomer or a hydrogenerated petroleum resin. In this case, the flexibility of the light-diffusing member is enhanced, and thus, the creaky noise is much less likely to be made. The elastomer preferably contains a styrene-ethylene butylene-styrene triblock copolymer (SEBS). In this case, the elastomer is easily compatible with the polypropylene resin, and therefore, the moldability of the composition (X) is less likely to degrade, and the performance of the light-diffusing member is less likely to be impaired. When the resin component contains a component other than the polypropylene resin, the percentage of the component other than the polypropylene resin to the resin component is, for example, greater than or equal to 3 mass% and less than or equal to 20 mass%.

The light-diffusing agent is produced as particles having a property of diffusing light when the light passes through the light-diffusing member including the composition (X). The light-diffusing agent contains silicone powder. The silicone powder has a high light diffusing effect in the light-diffusing member. Moreover, the silicone powder hardly impairs the flexibility of the light-diffusing member or enables the flexibility of the light-diffusing member to be enhanced. Therefore, the silicone powder can suppress the creaky noise to be made in the light-diffusing member while imparting the light-diffusing property to the light-diffusing member.

The silicone powder is preferably powder of spherical particles. In this case, the light-diffusing property of the light-diffusing member can be further enhanced. Here, "spherical" refers to a shape which is generally recognized as a sphere, and to that extent, the shape may involve deformation.

The refractive index of the silicone powder is preferably greater than or equal to 1.41 and less than or equal to 1.45. When the refractive index is greater than or equal to 1.41 and less than or equal to 1.45, the refractive index difference between the silicone powder and the polypropylene resin is large, and the transmittance and the light-diffusing property of the light-diffusing member can be further enhanced.

The mean particle size of the silicone powder is preferably greater than or equal to 3 µm and less than or equal to 8 µm. When the mean particle size is greater than or equal to 3 µm, the silicone powder is less likely to agglomerate, and thereby, the silicone powder can satisfactorily be dispersed in the composition (X) and in the light-diffusing member, and a good light-diffusing property can be imparted to the light-diffusing member. Further, when the mean particle size is less than or equal to 8 µm, there is the advantage that the visible light transmittance of the light-diffusing member is less likely to decrease. Furthermore, the mean particle size is more preferably less than or equal to 5 µm. Note that the mean particle size of the silicone powder is a mean diameter calculated from a volumetric particle size distribution obtained by a laser diffraction/scattering particle size distribution measurement device.

The amount of the silicone powder relative to 100 parts by mass of the polypropylene resin is preferably greater than or equal to 0.5 parts by mass and less than or equal to 10.0 parts by mass. When the amount of the silicone powder is greater than or equal to 0.5 parts by mass, the light-diffusing property of the light-diffusing member can further be enhanced. When the amount of the silicone powder is less than or equal to 10.0 parts by mass, a good light-diffusing property can be imparted to the light-diffusing member without impairing light transparency. The amount of the silicone powder is more preferably greater than or equal to 1.0 parts by mass. Moreover, the amount of the silicone powder is more preferably less than or equal to 5.0 parts by mass.

The light-diffusing agent may contain only the silicone powder or may further contain a material other than the silicone powder. The light-diffusing agent may contain, as the material other than the silicone powder, at least one of an inorganic particle or an organic particle. The inorganic particle contains at least one selected from the group consisting of, for example, silica, magnesium silicate, aluminum hydroxide, aluminum oxide, zinc oxide, and barium sulfide. The organic particle contains at least one selected from the group consisting of an acrylic resin, an acryonitrile resin, polyurethane, polyvinyl chloride, polystyrene, polyamide, and polyacryonitrile.

The light-diffusing agent may further contain barium sulfate. That is, the composition (X) may further contain barium sulfate. In this case, the light-diffusing member can have a particularly good light-diffusing property. This is probably because concurrent use of the silicone powder having a low refractive index and the barium sulfate having a high refractive index with respect to the polypropylene resin can further enhance the light-diffusing property.

When the light-diffusing agent contains the barium sulfate, the barium sulfate is preferably light. Saying that the barium sulfate is light means that the barium sulfate is refined by a chemical synthesis method. In this case, the light-diffusing property of the light-diffusing member can be further enhanced.

The mean particle size of the barium sulfate is preferably greater than or equal to 3 µm and less than or equal to 6 µm. When the mean particle size is greater than or equal to 3 µm, the barium sulfate is less likely to agglomerate, and thereby, the barium sulfate can satisfactorily be dispersed in the composition (X) and in the light-diffusing member, and a good light-diffusing property can be imparted to the light-diffusing member. Moreover, when the mean particle size is less than or equal to 6 µm, there is the advantage that the visible light transmittance of the light-diffusing member is less likely to decrease. Note that the mean particle size of the barium sulfate is a mean diameter calculated from a volumetric particle size distribution obtained by a laser diffraction/scattering particle size distribution measurement device.

When the light-diffusing agent contains the barium sulfate, the amount of the barium sulfate relative to 100 parts by mass of the polypropylene resin is preferably greater than or equal to 1 part by mass and less than or equal to 5 parts by mass. When the amount of the barium sulfate is greater than or equal to 1 part by mass, the light-diffusing property of the light-diffusing member can further be enhanced. When the amount of the barium sulfate is less than or equal to 5 parts by mass, the light-diffusing property can be imparted to the light-diffusing member without impairing transparency. The amount of the barium sulfate is more preferably greater than or equal to 1.5 parts by mass, and much more preferably greater than or equal to 4.0 parts by mass.

The amount of the entire light-diffusing agent relative to 100 parts by mass of the polypropylene resin depends on the type(s) of a material(s) included in the light-diffusing agent and is, for example, greater than or equal to 0.5 parts by mass and less than or equal to 12 parts by mass. When the total amount of the light-diffusing agent is less than 0.5 parts by mass, a satisfactory light-diffusing property cannot be imparted in some cases, whereas when the amount of the entire light-diffusing agent is greater than 12 parts by mass, the transmittance may be impaired.

The composition (X) may further contain an antioxidant. In this case, the durability of the light-diffusing member can be enhanced. The antioxidant contains at least one selected from the group consisting of, for example, a phenol-based antioxidant, an amine-based antioxidant, a phosphorus-based antioxidant, and a sulfur-base antioxidant. When the composition (X) contains the antioxidant, the amount of the antioxidant relative to 100 parts by mass of the polypropylene resin is preferably greater than or equal to 0.5 parts by mass and less than or equal to 1.5 parts by mass. When the amount of the antioxidant is greater than or equal to 0.5 parts by mass, there is the advantage that the weatherability of the light-diffusing member can be improved, and when the amount of the antioxidant is less than or equal to 1.5 parts by mass, there is the advantage that bleedout of the antioxidant from the light-diffusing member can be suppressed.

The composition (X) may further contain a mold release agent. In this case, mold releasability in the case of producing the light-diffusing member from the composition (X) by molding is enhanced. The mold release agent contains at least one selected from the group consisting of, for example, stearic acid metallic soap and montanic acid metallic soap. When the composition (X) contains the mold release agent, the amount of the mold release agent relative to 100 parts by mass of the polypropylene resin is preferably greater than or equal to 0.5 parts by mass and less than or equal to 1.5 parts by mass. When the amount of the mold release agent is greater than or equal to 0.5 parts by mass, there are the advantages that the mold release agent can uniformly be dispersed in the resin composition and satisfactory mold releasability can be obtained, whereas when the amount of the mold release agent is less than or equal to 1.5 parts by mass, there is the advantage that discoloring and/or bleedout of the molded product can be suppressed.

The composition (X) may further contain a component(s) other than the components explained above, as necessary. For example, the composition (X) may contain at least one selected from the group consisting of a light stabilizer, an ultraviolet absorbing agent, a thermal ray absorbing agent, and a fire retardant.

The composition (X) may contain a color material. In this case, a light-diffusing member having a color according to the type and amount of the color material can be obtained. The color material may contain at least one of a dye or a pigment. As the color material, any pigment, dye, and the like designated in the color index may be employed, and the color material contains at least one selected from the group consisting of, for example, C.I. Pigment Blue 29 (ultramarine blue) and C.I. Pigment Orange 43.

The color material is, for example, a black color material. In this case, the light-diffusing member can have a blackish color. In this case, the light-diffusing member is applicable to, for example, a lighting device, such as a door trim lamp, as an interior decoration in an automobile. The exterior appearance of interior decoration materials for automobiles has mute colors in many cases, and therefore, when the light-diffusing member is colorless or has a bright color, the exterior appearance of the light-diffusing member may difficultly match the exterior appearance of the interior decoration material while the light source of the lighting device is off. However, when the light-diffusing member has a blackish color, the exterior appearance of the lighting device including the light-diffusing member easily match the exterior appearance of the interior decoration materials for the automobiles. Naturally, the application of the light-diffusing member in the case of the composition (X) having a black color material is not limited to the examples above.

The black color material may contain at least one of a black pigment or a black dye. As the black pigment and the black dye, for example, any black pigment and any black dye designated in the color index may respectively be employed. The black pigment contains at least one selected from the group consisting of, for example, aniline black (C.I. Pigment Black 1), black titanium oxide, and carbon black. The black dye contains, for example, a disazo-based acidic dye (C.I. Acid Black 1).

When the composition (X) contains the color material, the proportion of the color material in the composition (X) is accordingly adjusted such that the light-diffusing member has appropriate light transparency and a desired color. The amount of the color material is, for example, greater than or equal to 0.01 parts by mass and less than or equal to 1.00 parts by mass relative to 100 parts by mass of the polypropylene resin. This amount is more preferably greater than or equal to 0.05 parts by mass, and much more preferably greater than or equal to 0.10 parts by mass. Moreover, this amount is preferably less than or equal to 0.5 parts by mass, and much more preferably less than or equal to 0.3 parts by mass.

It is preferable that in the case of a sample formed in the shape of a plate having a thickness of 2 mm from the composition (X), the total light transmittance of the sample is higher than or equal to 45% and lower than or equal to 80%. When the total light transmittance is higher or equal to than 45%, light visually recognized after passing through the light-diffusing member produced from the composition (X) can have good luminance. Moreover, when the total light transmittance is lower than 80%, there is the advantage that visual recognition of the shape of the light source via the light-diffusing member becomes more difficult. This total light transmittance is more preferably higher than or equal to 60%, and much more preferably higher than or equal to 70%.

It is also preferable that the haze of the sample is higher than 90%. In this case, the light-diffusing member makes the visual recognition of the shape of the light source particularly difficult.

Moreover, when light having a wavelength of 550 nm is incident on the sample in a thickness direction defined with respect to the sample, the half-value angle of the light output from the sample after passing through the sample is preferably greater than or equal to 20°. Also in this case, the light-diffusing member makes the visual recognition of the shape of the light source particularly difficult. The half-value angle is more preferably greater than or equal to 40°. Moreover, the half-value angle is, for example, less than or equal to 60°.

When the composition (X) contains the color material, it is also preferable that in the case of a sample formed in the shape of a plate having a thickness of 2 mm from the composition (X), the total light transmittance of the sample is higher than or equal to 10% and lower than or equal to 50%, and the haze of the sample is higher than or equal to 90%, and that when light having a wavelength of 550 nm is incident on the sample in a thickness direction defined with respect to the sample, the half-value angle of the light output from the sample after passing through the sample is greater than or equal to 20°. In this case, the light-diffusing member can have appropriate light transparency and an appropriate light-diffusing property while the light-diffusing member is colored to have a color according to the color material. The total light transmittance in this case is more preferably higher than or equal to 15%, and much more preferably higher than or equal to 30%. Further, the half-value angle in this case is more preferably greater than or equal to 40°. Furthermore, the half-value angle is, for example, less than or equal to 60°.

When the composition (X) contains the color material, it is also preferable that in the case of a sample formed in the shape of a plate having a thickness of 2 mm from the composition (X), the total light transmittance of the sample is higher than or equal to 5%, the haze of the sample is higher than or equal to 70%, and L* of the sample in the Lab color space is less than or equal to 30. It is particularly preferable that the color material contains a black color material to provide the properties described above. In this case, the light-diffusing member can have a blackish color. In this case, the light-diffusing member is applicable to, for example, a lighting device, such as a door trim lamp, as an interior decoration in an automobile. In this case, the exterior appearance of interior decoration materials for automobiles has mute colors in many cases, and therefore, the exterior appearance of the light-diffusing member easily matches the exterior appearance of the interior decoration materials for the automobiles. The total light transmittance in this case is more preferably higher than or equal to 15%, and much more preferably higher than or equal to 30%. Moreover, the total light transmittance is, for example, lower than or equal to 60%. Moreover, L* is more preferably less than or equal to 28, and much more preferably less than or equal to 25. Moreover, L* is, for example, greater than or equal to 15. Note that the Lab color space was standardized by the international commission on illumination (CIE) in 1976.

Moreover, it is preferable that a decision made for a molded article produced from the composition (X) by the comprehensive evaluation of an abnormal noise evaluation test is a pass decision. The contents of the abnormal noise evaluation test will be described in detail in Examples which will be described later. In this case, the light-diffusing member is particularly less likely to make the creaky noise.

A stick-slip abnormal noise generation risk of a molded article formed from the composition (X) at a load of 10 N and a speed of 4.0 mm/s when a counterpart material produced from an acryonitrile·butadiene·styrene copolymer resin is employed is preferably less than 1.0. Moreover, it is also preferable that the stick-slip abnormal noise generation risk of the molded article at a load of 10 N and a speed of 1.0 mm/s when the counterpart material produced from the acryonitrile·butadiene·styrene copolymer resin is employed is less than 1.5. The stick-slip abnormal noise generation risk is defined by the German association of the automotive industry standard VDA230-206. In this case, the light-diffusing member is particularly less likely to make the creaky noise.

The loss coefficient of the molded article formed from the composition (X) at 30°C is preferably greater than or equal to 0.03. Also in this case, the light-diffusing member is particularly less likely to make the creaky noise. The loss coefficient is more preferably greater than or equal to 0.05, and much more preferably greater than or equal to 0.07. Moreover, the loss coefficient is, for example, less than or equal to 0.10.

Those properties are realizable by accordingly adjusting the composition of the composition (X) within the range described above.

The composition (X) is prepared by, for example, mixing the components with a mixer, a blender, or the like to obtain a mixture, heating and kneading the mixture, and grinding the mixture, and optionally pelletizing the mixture.

The light-diffusing member is a molded product containing the composition (X). That is, the light-diffusing member is formed from a light-diffusing resin composition. The shape of the light-diffusing member is, for example, a plate shape or a bar shape, but the shape of the light-diffusing member is not limited to these examples. The light-diffusing member is produced by molding the composition (X) by an appropriate method. The composition (X) can be molded by, for example, a method such as a compression molding method or an injection molding method.

The shape and the dimension of the light-diffusing member are designed in accordance with the structure of a device to which the light-diffusing member is to be applied. When the light-diffusing member has a plate shape, the thickness of the light-diffusing member is, for example, greater than or equal to 1 mm and less than or equal to 5 mm.

A device including the light-diffusing member will be described. The device including the light-diffusing member is, for example, a lighting device or a display device which performs display by light emission. Each of the lighting device and the display device includes a light source and a light-diffusing member through which light emitted from the light source passes. The light emitted from the light source passes through the light-diffusing member, and thereby, a bright portion of the light-diffusing member appears to be moderately blurred. Thus, visual recognition of the shape of the light source via the light-diffusing member becomes difficult.

FIG. 1 shows a display device including a light-diffusing member 1, specifically, an instrument panel of an automobile. The display device includes a substrate 3 including a light source, the light-diffusing member 1 in the shape of a plate, and a cover 2 which are stacked on top of another in this order. The substrate 3 is, for example, a printed wiring board, and as the light source, for example, a light-emitting element such as a light-emitting diode is mounted on the substrate 3. The cover 2 is, for example, a sheet or plate made of a resin. The cover 2 includes a transparent part which has light transparency and a non-transparent part which has lower light transparency than the transparent part, and the transparent part is disposed at a location corresponding to the light source. The light source emits light, thereby the display device emits light at the location corresponding to the transparent part. When the display device emits light, external explicit visual recognition of the shape of the light source becomes difficult in the present embodiment.

In the present embodiment, the light-diffusing member 1 is less likely to make the creaky noise, and therefore, for example, in the display device shown in FIG. 1, even when a vibration caused by driving of the automobile causes, for example, a friction of the light-diffusing member 1 with the cover 2, the substrate 3, or a member holding the light-diffusing member 1, the creaky noise is less likely to be made.

Note that the light-diffusing member may be applied to any appropriate device other than the instrument panel of the automobile. For example, the light-diffusing member may be applied to the door trim lamp as already explained. The light-diffusing member may be applied to, for example, a lighting device or a display device other than the automobile application.

### (Summary)

A light-diffusing resin composition of a first aspect of the present disclosure contains a polypropylene resin and silicone powder.

This aspect provides a light-diffusing resin composition allowing for formation of a light-diffusing member which is less likely to make a creaky noise.

In a second aspect of the present disclosure referring to the first aspect, an amount of the silicone powder relative to 100 parts by mass of the polypropylene resin is greater than or equal to 0.5 parts by mass and less than or equal to 10.0 parts by mass.

This aspect enables a good light-diffusing property to be imparted to the light-diffusing member without impairing light transparency.

In a third aspect of the present disclosure referring to the first or second aspect, the silicone powder is powder of spherical particles, a refractive index of the silicone powder is greater than or equal to 1.41 and less than or equal to 1.45, and a mean particle size of the silicone powder calculated from a volumetric particle size distribution obtained by a laser diffraction/scattering particle size distribution measurement device is greater than or equal to 3 µm and less than or equal to 8 µm.

This aspect enables the light-diffusing property of the light-diffusing member to be further enhanced.

In a fourth aspect of the present disclosure referring to any one of the first to third aspects, the light-diffusing resin composition further contains barium sulfate.

With this aspect, the light-diffusing member can have a particularly good light-diffusing property.

In a fifth aspect of the present disclosure referring to the fourth aspect, an amount of the barium sulfate relative to 100 parts by mass of the polypropylene resin is greater than or equal to 1 part by mass and less than or equal to 5 parts by mass.

This aspect enables a further enhanced light-diffusing property to be imparted to the light-diffusing member without impairing transparency.

In a sixth aspect of the present disclosure referring to the fourth or fifth aspect, the barium sulfate is light, and a mean particle size of the barium sulfate calculated from a volumetric particle size distribution obtained by a laser diffraction/scattering particle size distribution measurement device is greater than or equal to 3 µm and less than or equal to 6 µm.

This aspect enables a further enhanced light-diffusing property to be imparted to the light-diffusing member, and the visible light transmittance of the light-diffusing member is less likely to decrease.

In a seventh aspect of the present disclosure referring to any one of the first to sixth aspects, in a case of a sample formed in a shape of a plate having a thickness of 2 mm from the light-diffusing resin composition, a total light transmittance of the sample is higher than or equal to 45% and lower than or equal to 80%, a haze of the sample is higher than or equal to 90%, and when light having a wavelength of 550 nm is incident on the sample in a thickness direction defined with respect to the sample, a half-value angle of the light output from the sample after passing through the sample is greater than or equal to 20°.

With this aspect, the light-diffusing member makes visual recognition of the shape of the light source particularly difficult.

In an eighth aspect of the present disclosure referring to any one of the first to seventh aspects, the light-diffusing resin composition further contains a color material.

This aspect enables the light-diffusing member to have a color according to the color material.

In a ninth aspect of the present disclosure referring to the eighth aspect, the color material contains a black color material.

This aspect enables the light-diffusing member to have a blackish color.

In a tenth aspect of the present disclosure referring to the eighth or ninth aspect, in a case of a sample formed in a shape of a plate having a thickness of 2 mm from the light-diffusing resin composition, a total light transmittance of the sample is higher than or equal to 10% and lower than or equal to 50%, a haze of the sample is higher than or equal to 90%, and when light having a wavelength of 550 nm is incident on the sample in a thickness direction defined with respect to the sample, a half-value angle of the light output from the sample after passing through the sample is greater than or equal to 20°.

This aspect enables the light-diffusing member to have appropriate light transparency and light-diffusing property while the light-diffusing member contains the color material.

In an eleventh aspect of the present disclosure referring to the eighth or ninth aspect, in a case of a sample formed in a shape of a plate having a thickness of 2 mm from the light-diffusing resin composition, a total light transmittance of the sample is higher than or equal to 5%, a haze of the sample is higher than or equal to 70%, and L* of the sample in the Lab color space is less than or equal to 30.

This aspect enables the light-diffusing member to have appropriate light transparency while the light-diffusing member has the blackish color.

In a twelfth aspect of the present disclosure referring to any one of the first to eleventh aspects, a stick-slip abnormal noise generation risk of a molded article formed from the light-diffusing resin composition at a load of 10 N and a speed of 4.0 mm/s when a counterpart material produced from an aery onitrile butadiene styrene copolymer resin is employed is less than 1.0.

With this aspect, the light-diffusing member is particularly less likely to make the creaky noise.

In a thirteenth aspect of the present disclosure referring to any one of the first to twelfth aspects, a loss coefficient of a molded article formed from the light-diffusing resin composition at 30°C is greater than or equal to 0.03.

With this aspect, the light-diffusing member is particularly less likely to make the creaky noise.

A light-diffusing member of a fourteenth aspect of the present disclosure is formed from the light-diffusing resin composition of any one of the first to thirteenth aspects.

This aspect provides a light-diffusing member less which is likely to make the creaky noise.

### Examples

Examples of the present embodiment will specifically be described below. Note that the present embodiment is not limited to the examples below.

### 1. Preparation of Composition

Raw materials shown in Table 1 and Table 2 were mixed and were then heated and kneaded at 200°C, thereby preparing a composition.

Details of the raw materials are as described below.
- Polypropylene resin: Homopolymer of propylene. Item number MA3 manufactured by Japan Polypropylene Corporation.
- Polycarbonate resin: Item number H3000 manufactured by Mitsubishi Engineering-Plastics Corporation.
- Antioxidant: A mixture of item number Irganox 1010 manufactured by BASF Japan Ltd., item number Irganox 1035 manufactured by BASF Japan Ltd., and item number Irgafos 168 manufactured by BASF Japan Ltd. at a mass ratio of 2:1:2.
- Barium sulfate: Item number BMH-40 manufactured by SAKAI CHEMICAL INDUSTRY CO., LTD., mean particle size 4 µm.
- Silicone powder: Item number KMP-600 manufactured by Shin-Etsu Silicone Co., Ltd., mean particle size 5 µm.
- Black color material: Aniline black (C.I. Pigment Black 1).

### 2. Evaluation Tests

### (1) Total Light Transmittance

The composition was injection molded by using a mirror polished mold at a mold temperature of 60°C, an injection pressure of 30 MPa, and a holding time of 10 seconds, thereby producing a sample having a dimension of 60 mm × 60 mm × 2 mm.

The total light transmittance of the sample was measured with model number NDH5000 manufactured by NIPPON DENSHOKU INDUSTRIES CO., LTD. as a measurement device by a measurement method based on ASTM D 1003. The results are shown in Tables 1 and 2.

### (2) Haze

A Sample was produced by the same method as that in the "(1) Total Light Transmittance". The haze of the sample was measured with model number NDH5000 manufactured by NIPPON DENSHOKU INDUSTRIES CO., LTD. as a measurement device by a measurement method based on ASTMD1003. The results are shown in Tables 1 and 2.

### (3) Half-Value Angle

A sample was produced by the same method as that described in "(1) Total Light Transmittance". The half-value angle of the sample was measured with GC5000L manufactured by NIPPON DENSHOKU INDUSTRIES CO., LTD as a measurement device. To measure the half-value angle, an LED (light-emitting diode) having an emission wavelength of 550 nm was used as a light source. Light was caused to be incident on the sample in the thickness direction, and a light receiving intensity of the light output from the sample after passing through the sample was measured within a light receiving angle of from -85° to 85°. In this case, the light receiving intensity at 0° was the largest value, and a light receiving angle at which the ratio of the magnitude of the light receiving intensity to the light receiving intensity at 0° being defined as 100 is 50 was defined as the half-value angle. The results are shown in Tables 1 and 2.

### (4) Stick-Slip Abnormal Noise Generation Risk

The composition was injection molded with a mirror polished mold at a mold temperature of 60°C, an injection pressure of 30 MPa, and a holding time of 10 seconds, thereby producing a sample having a dimension of 110 mm × 110 mm × 2 mm.

The stick-slip abnormal noise generation risk, defined by the German association of the automotive industry standard VDA230-206, of the sample was measured. The stick-slip abnormal noise generation risk was measured with a stick slip tester manufactured by ZIEGLER as a measurement device, and under each of condition 1 (at a load of 10 N, and a speed of 1.0 mm/s) and condition 2 (at a load of 10 N, and a speed of 4.0 mm/s), by employing a counterpart material produced from an acryonitrile·butadiene·styrene copolymer resin, with three times of reciprocations, and at an amplitude of 20 mm.

As a result, an abnormal noise generation risk of less than 1.00 was evaluated as "A", an abnormal noise generation risk of greater than or equal to 1.00 and less than 1.50 was evaluates as "B", and an abnormal noise generation risk of greater than or equal to 1.50 was evaluated as "C".

### (5) Loss Coefficient

The composition was injection molded at a mold temperature of 60°C, an injection pressure of 30 MPa, and a holding time of 10s, thereby producing a sample having a dimension of 125 mm × 13 mm × 1.6 mm.

The loss coefficient of the sample was measured with model number PULSE/MS-18143 manufactured by Brüel & Kjær as a measurement device based on JIS K7391 at 30°C by a central exciting method.

As a result, a loss coefficient of greater than or equal to 0.03 was evaluated as "A", a loss coefficient of greater than or equal to 0.01 and less than 0.03 was evaluated as "B", and a loss coefficient of less than 0.01 was evaluated as "C".

### (6) Abnormal Noise Evaluation Test

Each of the composition and the polycarbonate resin was injection molded, thereby obtaining a first sample produced from the composition, a first sample produced from the polycarbonate resin, a second sample produced from the composition, and a second sample produced from the polycarbonate resin.

Each first sample is a multi-purpose test specimen having a dumbbell shape based on ISO3167 and is dimensioned such that the overall length is greater than or equal to 170 mm, the narrow section length is 80.0±2 mm, the parallel length is 40.0 mm, the grips width is 20.0±2 mm, the gauge width is 10.0±0.2 mm, and the thickness is 4.0±0.2 mm. Each second sample is a square plate and has a dimension of 85 mm × 85 mm × 2 mm.

Each second sample was placed on a rotary disk and was rotated at a rotational velocity of 70 rpm, wherein the center of each second sample was used as a rotation axis. In this state, an end of each first sample was pressed against a surface of a corresponding one of the second samples at a location 30 mm away from the rotation center while a load of 1 kgf(9.80665 N) was applied. Here, a sound pressure was measured at a location 5 cm above a location where each first sample and the corresponding one of the second samples are in contact with each other.

As a result, when the sound pressure was lower than 80 dB, a pass decision was made. In each of the case where the first sample was produced from the composition and the second sample was produced from the composition, the case where the first sample was produced from the composition and the second sample was produced from the polypropylene resin, and the case where the first sample was produced from the polypropylene and the second sample was produced from the composition, a case where a test result is a pass decision was evaluated as the comprehensive evaluation being "A", whereas a case of a fail decision made in at least one of the above cases was evaluated as the comprehensive evaluation being "B".

### (7) Visibility

A sample having a dimension of 60 mm × 60 mm × 2 mm was produced by the same method as that described in "(1) Total Light Transmittance". One surface of the sample was irradiated with light of a white LED light source from a location 20 mm away from the one surface, and an evaluator visually observed an opposite surface of the sample from the light source. From the result, the light-diffusing property was evaluated based on whether or not the visual recognition of the shape of the light source was difficult. The evaluation was performed based on evaluation criteria described below. A: Light-diffusing property was excellent. B: Light-diffusing property was poor.

### (8) Exterior Appearance Color

A sample having a dimension of 60 mm × 60 mm × 2 mm was produced by the same method as that described in "(1) Total Light Transmittance". The L* value, the a* value, and the b*value of the exterior appearance color of the sample in the Lab color space were measured with a colorimeter (model number SD7000 manufactured by NIPPON DENSHOKU INDUSTRIES CO., LTD.) by a SCI method.

**[Table 1]**

| | | | Examples | | | | | | |
|---|---|---|---|---|---|---|---|---|---|
| | | | 1 | 2 | 3 | 4 | 5 | 6 | 7 |
| Raw Materials/Part by Mass | Polypropylene Resin | | 100 | 100 | 100 | 100 | 100 | 100 | 100 |
| | Polycarbonate Resin | | | | | | | | |
| | Antioxidant | | 0.6 | 0.6 | 0.6 | 0.6 | 0.6 | 0.6 | 0.5 |
| | Barium Sulfate | | | | | 2 | 4 | | |
| | Silicone Powder | | 1 | 3 | 5 | 0.5 | 3 | 8 | 1 |
| | Black Color Material | | | | | | | | 0.1 |
| Evaluation | Total Light Transmittance/% | | 72 | 57 | 54 | 62 | 54 | 48 | 31 |
| | Haze/% | | 91 | 91 | 94 | 91 | 91 | 92 | 90 |
| | Half- Value Angle/° | | 28 | 58 | 59 | 48 | 58 | 61 | 31 |
| | Appearance Color | L* | 51.1 | 65.1 | 71.3 | 52.1 | 66.3 | 72.0 | 28.4 |
| | | a* | -0.5 | -0.6 | -0.4 | -0.5 | -0.5 | -0.4 | 0.1 |
| | | b* | -4.4 | -2.8 | -2.0 | -4.2 | -2.9 | -2.1 | -0.8 |
| | Stick-Slip Abnormal Noise Generation Risk | Condition 1 | B | B | B | B | B | B | B |
| | | Condition 2 | A | A | A | A | A | A | A |
| | Loss Coefficient | | A | A | A | A | A | A | A |
| | Comprehensive Evaluation of Abnormal Noise Evaluation Test | | A | A | A | A | A | A | A |
| | Visibility | | A | A | A | A | A | A | A |

**[Table 2]**

| | | | Example | | Comparative Example | | | | |
|---|---|---|---|---|---|---|---|---|---|
| | | | 8 | 9 | 1 | 2 | 3 | 4 | 5 |
| Raw Material/Part by Mass | Polypropylene Resin | | 100 | 100 | 100 | 100 | | | 100 |
| | Polycarbonate Resin | | | | | | 100 | 100 | |
| | Antioxidant | | 0.5 | 0.5 | 0.6 | 0.6 | 0.6 | 0.6 | 0.5 |
| | Barium Sulfate | | | | 2 | 16 | | | |
| | Silicone Powder | | 3 | 0.3 | | | | 5 | |
| | Black Color Material | | 0.1 | 0.2 | | | | | 0.1 |
| Evaluation | Total Light Transmittance/% | | 10 | 24 | 72 | 40 | 94 | 49 | 38 |
| | Haze/% | | 92 | 92 | 90 | 94 | 5 | 91 | 71 |
| | Half- Value Angle/° | | 57 | 26 | 1 | 65 | 1 | 57 | 1 |
| | Appearance Color | L* | 28.7 | 25.1 | 50.2 | 77.4 | 47.8 | 71.4 | 29.5 |
| | | a* | 0.1 | 0 | -0.5 | -0.5 | 3.8 | -0.9 | 0 |
| | | b* | -0.8 | -0.4 | -4.2 | -2.3 | -12.4 | -1.9 | -0.8 |
| | Stick-Slip Abnormal Noise Generation Risk | Condition 1 | B | B | B | B | C | C | B |
| | | Condition 2 | A | A | A | B | C | C | A |
| | Loss Coefficient | | A | A | A | B | C | C | A |
| | Comprehensive Evaluation of Abnormal Noise Evaluation Test | | A | A | A | A | B | B | A |
| | Visibility | | A | A | B | A | B | A | B |

As described above, in Examples 1 to 6 in each of which the polypropylene resin and the silicone powder were employed, all evaluation results were good. In contrast, when barium sulfate was added but no silicone powder was added, the half-value angle was small in Comparative Example in which a small amount of the barium sulfate was added, whereas in Comparative Example 2 in which a large amount of the barium sulfate was added, the half-value angle was large but the total light transmittance decreased, and the creaky noise was likely to be made. In Comparative Example 3 in which no polypropylene resin was employed and no light-diffusing agent was employed, the total light transmittance was high, but the other test results were poor. In Comparative Example 4 in which the silicone powder was employed but no polypropylene resin was employed, the creaky noise was likely to be made. Moreover, when the composition contained the black color material, all the test results were good in Examples 7 and 8 in which the polypropylene resin and the silicone powder were employed while the composition had a blackish color. In contrast, in Comparative Example 5 in which no silicone powder was employed, the half-value angle was small.

### Reference Signs List

- 1: Light-Diffusing Member
- 2: Cover
- 3: Substrate

## Claims

1. A light-diffusing resin composition comprising:
a polypropylene resin; and
a silicone powder.

2. The light-diffusing resin composition of claim 1, wherein
an amount of the silicone powder relative to 100 parts by mass of the polypropylene resin is greater than or equal to 0.5 parts by mass and less than or equal to 10.0 parts by mass.

3. The light-diffusing resin composition of claim 1 or 2, wherein
the silicone powder is powder of spherical particles,
a refractive index of the silicone powder is greater than or equal to 1.41 and less than or equal to 1.45, and
a mean particle size of the silicone powder calculated from a volumetric particle size distribution obtained by a laser diffraction/scattering particle size distribution measurement device is greater than or equal to 3 µm and less than or equal to 8 µm.

4. The light-diffusing resin composition of claim 1 or 2, further comprising barium sulfate.

5. The light-diffusing resin composition of claim 4, wherein
an amount of the barium sulfate relative to 100 parts by mass of the polypropylene resin is greater than or equal to 1 part by mass and less than or equal to 5 parts by mass.

6. The light-diffusing resin composition of claim 4, wherein
the barium sulfate is light, and a mean particle size of the barium sulfate calculated from a volumetric particle size distribution obtained by a laser diffraction/scattering particle size distribution measurement device is greater than or equal to 3 µm and less than or equal to 6 µm.

7. The light-diffusing resin composition of claim 1 or 2, wherein
in a case of a sample formed in a shape of a plate having a thickness of 2 mm from the light-diffusing resin composition,
a total light transmittance of the sample is higher than or equal to 45% and lower than or equal to 80%,
a haze of the sample is higher than or equal to 90%, and
when light having a wavelength of 550 nm is incident on the sample in a thickness direction defined with respect to the sample, a half-value angle of the light output from the sample after passing through the sample is greater than or equal to 20°.

8. The light-diffusing resin composition of claim 1 or 2, further comprising a color material.

9. The light-diffusing resin composition of claim 8, wherein
the color material contains a black color material.

10. The light-diffusing resin composition of claim 8, wherein
in a case of a sample formed in a shape of a plate having a thickness of 2 mm from the light-diffusing resin composition,
a total light transmittance of the sample is higher than or equal to 10% and lower than or equal to 50%,
a haze of the sample is higher than or equal to 90%, and
when light having a wavelength of 550 nm is incident on the sample in a thickness direction defined with respect to the sample, a half-value angle of the light output from the sample after passing through the sample is greater than or equal to 20°.

11. The light-diffusing resin composition of claim 8, wherein
in a case of a sample formed in a shape of a plate having a thickness of 2 mm from the light-diffusing resin composition,
a total light transmittance of the sample is higher than or equal to 5%,
a haze of the sample is higher than or equal to 70%, and
L* of the sample in the Lab color space is less than or equal to 30.

12. The light-diffusing resin composition of claim 1 or 2, wherein
a stick-slip abnormal noise generation risk of a molded article formed from the light-diffusing resin composition at a load of 10 N and a speed of 4.0 mm/s when a counterpart material produced from an aery onitrile butadiene styrene copolymer resin is employed is less than 1.0.

13. The light-diffusing resin composition of claim 1 or 2, wherein
a loss coefficient of a molded article formed from the light-diffusing resin composition at 30°C is greater than or equal to 0.03.

14. A light-diffusing member formed from the light-diffusing resin composition of claim 1 or 2.
